# NEUE EUROPÄISCHE PATENTSCHRIFT

(11) **EP 0 272 629 B2**
(45) Veröffentlichungstag und Bekanntmachung des Hinweises auf die Entscheidung über den Einspruch: **20.12.2000**
(45) Hinweis auf die Patenterteilung: 11.03.1992
(21) Anmeldenummer: 87118747.2
(22) Anmeldetag: 17.12.1987
(51) Int. Cl.: B29C 33/60

(54) **Trennmittel und dessen Verwendung**
Releasing agent and its use
Agent de démoulage et son application

(30) Priorität: 22.12.1986 DE 3643953
(43) Veröffentlichungstag der Anmeldung: 29.06.1988
(73) Patentinhaber: Chem-Trend, Inc., Howell, MI 48844-0860 (US)
(72) Erfinder: Hättich, Thomas, Dr., D-6900 Heidelberg (DE); Krug, William, D-6900 Heidelberg (DE); Schuster, Gerhard, D-8500 Nürnberg (DE)
(74) Vertreter: UEXKÜLL & STOLBERG

(56) Entgegenhaltungen:
- EP-A- 0 164 501
- EP-A- 0 188 219
- EP-A- 0 223 233
- GB-A- 694 004
- US-A- 3 507 790
- OA-Wachs BASF, Techn. Information TI/P 2991d. Ludwigshafen: BASF (November 1986).
- Hoechst-Wachse: Rohstoffe zur Herstellung von Trennmitteln. Augsburg: Hoechst (Juni 1981).
- Hoechst-Wachse: Ceridust, Hostalub, Wachsemulgatoren. Augsburg: Hoechst (April 1986).
- Fettamine und Folgeprodukte. Frankfurt am Main: Hoechst (Januar 1980).
- Pripol 1017/Pripol 1022 Dimer acids. Bebington U.K.: Unichema (Mai 1986).

## Beschreibung

Die Erfindung betrifft ein wässriges Trennmittel frei von organischen Lösungsmitteln, das als trennwirksame Substanzen Öl und/oder Wachs emulgiert in Wasser als Lösungsmittel enthält, sowie dessen Verwendung.

Die Herstellung von Gegenständen aus Polyurethanschaum erfolgt in Formen und kann nach den verschiedensten, aus dem Stand der Technik bekannten Verfahren erfolgen. Sowohl hinsichtlich der dabei einzusetzenden, den Schaum bildenden Komponenten als auch hinsichtlich der einzusetzenden Vorrichtungen und Formwerkzeuge gibt es eine große Vielfalt von Variationsmöglichkeiten, die dem Fachmann geläufig sind. In der Regel erfolgt die Beschickung der Form entweder im offenen oder geschlossenen Zustand durch einen Einschußkanal mit den über einen Mischkopf vermengten Polyol- und Isocyanat-Komponenten. Neben dem angestrebten Produkt und dessen gewünschten Eigenschaften richtet sich die Zusammensetzung der Komponenten danach, ob nach den Einstufenverfahren (Direktverfahren) oder nach dem Zweistufenverfahren (Prepolymerverfahren oder Semiprepolymervefahren) gearbeitet wird. Alle diese verschiedenen möglichen Verfahrensweisen sind in der Literatur ausführlich beschrieben, so daß sich ein detailliertes Eingehen darauf erübrigt. Es sei hierzu beispielsweise auf "Integralschaumstoffe", Piechota und Röhr, 1975; Kunststoff-Handbuch, Band VII, "Polyurethane", 1966; "Schaumkunststoffe", herausgegeben vom Fachverband Schaumkunststoffe in GKV, 1976 und Wittfoht, Kunststoff-Technisches Wörterbuch, Teil 3, verwiesen.

Zwecks leichter und sauberer Entnahme der in den aus Metall, Holz oder Kunststoff bestehenden Formen auspolymerisierten Schaumgegenstände werden die mit den schaumbildenden Komponenten bzw. dem Polyurethanschaum in Kontakt tretenden Formoberflächen vor der Beschickung der Form mit Trennmitteln (Formtrennmitteln) behandelt. Zu diesem Zweck werden die Werkzeugoberflächen unter Erzeugung eines Trennfilms mit einer gleichmäßigen Beschichtung durch ein Trennmittel versehen. Dies geschieht üblicherweise nach den bekannten spritz- und sprühtechnischen Verfahren, wobei das Trennmittel entweder durch hohen Materialdruck oder zusätzliche Druckkraft zerstäubt wird. Neben guten Entformungseigenschaften muß das Trennmittel in speziellen Fällen darüber hinaus einen Einfluß hinsichtlich der Oberflächenbeschaffenheit des fertigen Polyurethanschaumgegenstandes ausüben können. So werden durch bestimmte Zusätze, beispielsweise auf dem Kaltweichschaumsektor (Sitze, Nackenstützen, Armlehnen usw. in Autos) Offenzelligkeit und dadurch die geforderte "Atmungsfähigkeit" des Schaumgegenstandes erzeugt.

Herkömmliche Trennmittel bestehen aus organischen Lösungsmitteln und darin gelösten, dispergierten, suspendierten oder emulgierten trennwirksamen Substanzen, die in ihrer Gesamtheit als Festkörper bezeichnet werden. Hinsichtlich der mit diesen Trennmitteln verbundenen Nachteile, insbesondere auch unter Umweltschutzgesichtspunkten, und der seit geraumer Zeit laufenden Bestrebungen, wässrige Trennmittel zu entwickeln, sei beispielsweise auf die europäische Patentanmeldung 164501, die europäische Patentanmeldung 188219 und die deutsche Patentanmeldung P 35 41 513 verwiesen. Wie sich aus diesen Patentanmeldungen ergibt, besteht ein großer Bedarf an wässrigen Trennmitteln zum Einsatz in Verfahren zur Herstellung von Gegenständen aus Polyurethanschaum, wobei abgesehen von den gewünschten guten Entformungseigenschaften auch bezüglich der Trenmmittelverarbeitbarkeit Eigenschaften gefordert werden, wie sie von den herkömmlichen Trennmitteln auf Basis organischer Lösungsmittel bekannt sind.

Der vorliegenden Erfindung liegt dementsprechend die Aufgabe zugrunde, ein neues wässriges, von organischen Lösungsmitteln freies Trennmittel der eingangs genannten Art vorzuschlagen, das ausgezeichnete Entformungseigenschaften besitzt, bei seiner Verwendung zu Polyurethangegenständen mit guten Oberflächeneigenschaften führt und in Abhängigkeit von den Taktzeiten bei den jeweils zur Erzielung ausreichend kurzer Ablüftungszeiten erforderlichen Temperaturen eingesetzt werden kann.

Zur Lösung dieser Aufgabe wird ein wässriges, von organischen Lösungsmitteln freies Trennmittel gemäß Anspruch 1 vorgeschlagen, das dadurch gekennzeichnet ist, daß es als weitere trennwirksame Substanz ein oder mehrere aliphatische, primäre, sekundäre und/oder tertiäre Amine mit mindestens einem C₁₂-C₂₄ Alkylrest, wobei bei den sekundären und tertiären Aminen die weiteren Alkylreste C₁-C₂₄ Alkylreste sein können, und als Emulgator für das oder die Amine ein oder mehrere Ammoniumalze mit der Formel [NR₁R₂R₃R₄]⁺X⁻ enthält, wobei R₁, R₂, R₃ und R₄ unabhängig voneinander Wasserstoff oder C₁-C₂₄ Alkylreste mit der Maßgabe bedeuten, daß mindestens einer der Reste R₁, R₂, R₃ und R₄ ein C₁-C₂₄ Alkylrest ist, und X⁻ ein Anion bedeutet.

Bevorzugte Ausführungsformen des erfindungsgemäßen Trennmittels und dessen Verwendung ergeben sich aus den Unteransprüchen sowie der folgenden Beschreibung.

Erfindungsgemäß wurde überraschend gefunden, daß hydrophobe Amine (sogenannte Fettamine) mit mindestens einem C₁₂-C₂₄ Alkylrest trennwirksame Substanzen darstellen. Bekannt war bisher nur, daß Amine als PU-Schaumbeschleuniger und -Stabilisatoren geeignet sind. Bekannt waren darüberhinaus die Kationenaktivität und die ausgeprägte Substantivität derartiger Amine (s. z.B. Hoechst-Broschüte E Hoe. 4200 "Fettamine und Folgeprodukte", Seiten 6 und 7; auf diese Broschüre sei auch hinsichtlich der Nomenklatur der Fettamine hingewiesen). Es hat sich gezeigt, daß diese Eigenschaften für die erfindungsgemäßen Zwecke außerordentlich hilfreich sind. Ferner bestätigte sich, daß sich diese Amine mit Ammoniumsalzen und vorzugsweise mit den Aminen entsprechenden Ammoniumsalzen als Emulgator sehr gut emulgieren lassen, wobei entgegen den Erfahrungen mit herkömmlichen Emulgatoren die Entformbarkeit überraschenderweise nicht nur nicht beeinträchtigt, sondern häufig sogar verbessert wird. Dies ist deshalb so überraschend, weil normalerweise die Trennwirksamkeit eines Trenmmittels durch Zusatz von Emulgatoren verringert und in manchen Fällen sogar vollkommen aufgehoben wird. Hinzukommt, daß die erfindungsgemäße Kombination aus Amin als trennwirksame Substanz und entsprechendem Ammoniumsalz als Emulgator eine sehr einfache Herstellung erlaubt, indem das als trennwirksame Substanz gewünschte Amin einfach durch Zusatz einer unterstöchiometrischen Menge einer Säure teilweise in das entsprechende Ammoniumsalz umgewandelt wird.

Als geeignete hydrophobe Amine mit Trennwirksamkeit können erfindungsgemäß aliphatische primäre, sekundäre und/oder tertiäre Amine mit Resten mit mindestens einem C₁₂ bis C₂₄ Alkylrest verwendet werden. Im Falle der sekundären und tertiären Amine können der zweite und dritte Alkylrest auch kürzerkettig sein, so daß in diesen Aminen neben mindestens einem C₁₂-C₂₄-Alkylrest im übrigen ein oder zwei C₁-C₂₄-Alkylreste vorhanden sind. Wenngleich nicht-funktionelle lineare Amine bevorzugt sind, können auch funktionelle Amine wie Aminethoxylate eingesetzt werden. Beispiele für geeignete Amine sind Lauryl-, Tetradecyl-, Cetyl-, Oleyl-, Stearyl-, Behenyl- und Erucaamin. In der Praxis werden selbstverständlich häufig Gemische von Aminen, wie insbesondere Kokosamine, verwendet, die sich aus den erfindungsgemäß geeigneten Aminen und insbesondere den zuvor genannten Aminen zusammensetzen. Bevorzugt sind insbesondere Stearylamin, Distearylamin, Methyldistearylamin, Oleylamin und Tetradecylamin bzw. die zuvor genannten, den natürlichen Vorkommen entsprechenden Mischungen dieser Verbindungen. Geeignet sind ferner Ethoxylate der erfindungsgemäß zu verwendenden Amine, insbesondere Stearylaminethoxylate, deren Ethoxylierungsgrad üblicherweise im Bereich von 2 bis 30 liegt. Der Mengenanteil dieser trennwirksamen Amine bzw. Aminderivate im erfindungsgemäßen Trennmittel beträgt gewöhnlich 0,05 bis 10 Gew.% und vorzugsweise 0,1 bis 5 Gew.%.

Als Emulgator dient vorzugsweise das dem trennwirksamen Amin entsprechende Ammoniumsalz. Es können aber auch vom Amin abweichende Ammoniumsalze verwendet werden. Geeignet sind grundsätzlich Ammoniumsalze mit der allgemeinen Formel [NR₁R₂R₃R₄]⁺X⁻, in der R₁, R₂, R₃ und R₄ unabhängig voneinander Wasserstoff oder C₁-C₂₄-Alkylreste mit der Maßgabe sind, daß mindestens einer der Reste R₁, R₂, R₃ und R₄ ein C₁-C₂₄-Alkylrest, ist und X⁻ ein geeignetes Anion bedeutet. Es können handelsübliche quartäre Ammoniumsalze sowie Ammoniumsalze, die bei der Umsetzung der entsprechenden Amine mit Salz-, Glycol, Zitronen-, Essig-, Propion- oder längerkettigen C₁₂-C₂₄-Fettsäuren entstehen, verwendet werden. Bevorzugte Emulgatoren sind Distearyldimethylammoniumchlorid, Trimethylstearylammoniumchlorid, Stearylammoniumchlorid, Methyldistearylammoniumchlorid, Kokosaminacetat sowie Mischungen dieser Verbindungen. Der Mengenanteil der Ammoniumsalze im erfindungsgemäßen Trennmittel beträgt üblicherweise 0,1 bis 5 Gew.% und vorzugsweise 0,1 bis 2,5 Gew.%.

Ein besonderes Merkmal des erfindungsgemäßen Trennmittels besteht darin, daß es sich um eine sogenannte kationische Emulsion handelt, während bisher nur Trennmittel in Form anionischer Emulsionen bekannt waren.

Ein besonderes anwendungstechnisches Merkmal des erfindungsgemäßen Trennmittels besteht in der minimalen Ausbildung von Trennmittelrückständen nach der Entformung (kein Aufbau).

Als trennwirksame Substanz enthält das erfindungsgemäße Trennmittel außerdem noch aus dem Stand der Technik bekannte Bestandteile. Als trennwirksame Öle können dementsprechend aliphatische oder aromatische, natürliche oder synthetische Öle verwendet werden. Deren mengenmäßiger Anteil beträgt im erfindunsgemäßen Trennmittel üblicherweise 1 bis 25 Gew.% und vorzugsweise 10 bis 20 Gew.%.

Anstelle von oder in Komination mit Öl, kann Wachs als weitere trennwirksame Substanz eingearbeitet werden. Auch hier sind die üblichen gesättigten oder ungesättigten, natürlichen oder funktionellen Wachse, die als Wachskomponente für PU-Trennmittel bekannt sind, verwendbar.

Als geeignete Beispiele seien Polyethylen-, Polypropylen-, Polybutin-, Polybutadien- und Bienenwachs sowie Esterwachse und Amidwachse mit Schmelzpunkten von 30 bis 145°C genannt. Der Mengenanteil derartiger Wachse im erfindungsgemäßen Trennmittel beträgt bis zu 10 Gew.% und vorzugsweise 2 bis 8 Gew.%.

Selbstverständlich kann das erfindungsgemäße Trennmittel auch weitere aus dem Stand der Technik bekannte Bestandteile enthalten. So können beispielsweise neben den erfindungsgemäß als Emulgator eingesetzten Ammoniumsalzen auch bekannte nicht-ionische Emulgatoren verwendet werden. Die Verwendung derartiger Bestandteile ist dem Fachmann geläufig, aber nicht erfindungswesentlich.

Der Trennmittelauftrag, d.h. die Zerstäubung des Trennmittels sowie die Regulierung des Sprühnebels, erfolgt nach den bereits eingangs erwähnten bekannten spritz- und sprühtechnischen Verfahren (vgl. insbesondere auch die europäische Patentanmeldung 188219). Das erfindungsgemäße Trennmittel ist also hinsichtlich der Auftragstechnik unproblematisch und kann sowohl durch Kaltversprühen sowie Versprühen des auf 30 bis 90°C und vorzugsweise 40 bis 70°C erwärmten Materials aufgebracht werden. Es bestehen keine Einschränkungen hinsichtlich der Anwendung der Airless-, Airmixed-, Niederdruck-Airless- oder Airless-Plus-Technik. Selbstverständlich läßt sich insbesondere das Abdunstverhalten des im erfindungsgemäßen Trennmittel enthaltenen Wassers durch geeignete Wahl der Temperatur beeinflussen.

### Beispiel:

Es wurden 4 wässrige PU-Trennmittel in Form einer Emulsion in üblicher Weise hergestellt. Die jeweilige Zusammensetzung diese Trennmittel ist in der folgenden Tabelle angegeben.

| | 1 | 2 | 3 | 4 |
|---|---|---|---|---|
| Öl | 9.0 | 19.2 | 19.2 | 18.0 |
| weiches Wachs | 1.0 | 0.8 | 0.8 | 1.0 |
| herkömmlicher Emulgator | 1.0 | | | |
| Verlaufmittel | | 2.0 | 2.0 | 2.0 |
| Salzsäure | | 0.16 | 0.15 | |
| Stearylamin | | 3.8 | 1.9 | 1.5 |
| Methyldistearylamin | | | 1.9 | 1.5 |
| Dimethyldistearylammoniumchlorid | | | | 0.8 |
| Wasser | Rest | Rest | Rest | Rest |

| | | | | |
|---|---|---|---|---|
| * In der Tabelle sind die Mengenanteile der jeweiligen Bestandteile in Gew.% angegeben. | | | | |

Die vier wässrigen Trennmittel gemäß der obigen Tabelle wurden in einem üblichen Verfahren zur Herstellung von Gegenständen aus Polyurethanschaum eingesetzt. Dabei ergab sich, daß das Trennmittel 1 eine nicht ausreichende Entformung und eine unbefriedigende Oberfläche des Gegenstands aus Polyurethanschaum lieferte. Demgegenüber ergab Trennmittel 2 eine sehr gute Entformbarkeit und der mit diesem Trennmittel hergestellte Gegenstand aus Polyurethanschaum besaß eine gute Oberfläche. Auch die Trennmittel 3 und 4 lieferten eine gute Entformbarkeit und gute Oberflächen der hergestellten Gegenstände aus Polyurethanschaum.

## Patentansprüche

1. Wässriges, von organischen Lösungsmitteln freies Trennmittel, das als trennwirksame Substanzen Öl und/oder Wachs emulgiert in Wasser als Lösungsmittel enthält, dadurch gekennzeichnet, dass es als weitere trennwirksame Substanz ein oder mehrere aliphatische primäre, sekundäre und/oder tertiäre Amine mit mindestens einem C₁₂-C₂₄ Alkylrest, wobei bei den sekundären und tertiären Aminen die weiteren Alkylreste C₁-C₂₄ Alkylreste sein können, und als Emulgator für das oder die Amine ein oder mehrere Ammoniumsalze mit der Formel [NR₁R₂R₃R₄]⁺X⁻ enthält, wobei R₁, R₂, R₃ und R₄ unabhängig voneinander Wasserstoff oder C₁-C₂₄ Alkylreste mit der Maßgabe bedeuten, dass mindestens einer der Reste R₁, R₂, R₃ und R₄ ein C₁-C₂₄ Alkylrest ist, und X⁻ ein Anion bedeutet.

2. Trennmittel nach Anspruch 1, dadurch gekennzeichnet, dass es als trennwirksames Amin Stearylamin, Distearylamin, Methyldistearylamin, Oleylamin, Tetradecylamin und/oder Stearylaminethoxylate enthält.

3. Trennmittel nach Anspruch 1 oder 2, dadurch gekennzeichnet, dass es als Emulgator für das oder die Amine ein oder mehrere Ammoniumsalze enthält, die sich von den als trennwirksame Substanz vorhandenen Aminen ableiten.

4. Trennmittel nach einem der Ansprüche 1 bis 3, dadurch gekennzeichnet, dass es als Emulgator für das oder die Amine Distearyldimethylammoniumchlorid, Trimethylstearylammoniumchlorid, Stearylammoniumchlorid, Methyldistearylammoniumchlorid und/oder Kokosaminacetat enthält.

5. Trennmittel nach einem der Ansprüche 1 bis 4, dadurch gekennzeichnet, dass es das oder die Amine in einer Konzentration von 0,05 bis 10 und vorzugsweise 0,1 bis 5 Gew.% enthält.

6. Trennmittel nach einem der Ansprüche 1 bis 5, dadurch gekennzeichnet, dass es das oder die als Emulgator für das Amin dienenden Ammoniumsalze in einer Konzentration von 0,1 bis 5 und vorzugsweise 0,1 bis 2,5 Gew.% enthält.

7. Trennmittel nach einem der Ansprüche 1 bis 5, dadurch gekennzeichnet, dass es das trennwirksame Öl in einer Menge von 1 bis 25 und vorzugsweise 10 bis 20 Gew.% und/oder das trennwirksame Wachs in einer Menge von bis zu 10 Gew.% und vorzugsweise 2 bis 8 Gew.% enthält.

## Claims

1. Aqueous, organic solvent free release agent which contains, as substances with a release effect, oil and/or wax emulsified in water as solvent, characterized in that it contains, as further substance with a release effect, one or more aliphatic primary, secondary and/or tertiary amines with at least one C₁₂-C₂₄ alkyl radical, whereby, in the case of the secondary and tertiary amines, the other alkyl radicals can be C₁-C₂₄ alkyl radicals, and contains, as emulsifier for the amine or amines, one or more ammonium salts with the formula [NR₁R₂R₃R₄]⁺X⁻, R₁, R₂, R₃ and R₄ signifying, independently of each other, hydrogen or C₁-C₂₄ alkyl radicals, with the proviso that at least one of the radicals R₁, R₂, R₃ and R₄ is a C₁-C₂₄ alkyl radical, and X⁻ signifies an anion.

2. Release agent according to claim 1, characterized in that it contains, as amine with release effect, stearylamine, distearylamine, methyl distearylamine, oleyl amine, tetradecylamine and/or stearylaminoethoxylates.

3. Release agent according to claim 1 or 2, characterized in that it contains, as emulsifier for the amine or amines, one or more ammonium salts, which derive from the amines present as substance with release effect.

4. Release agent according to one of claims 1 or 3, characterized in that it contains, as emulsifier for the amine or amines, distearyl dimethyl ammonium chloride, trimethyl stearyl ammonium chloride, stearyl ammonium chloride, methyl distearyl ammonium chloride and/or coconut aminoacetate.

5. Release agent according to one of claims 1 to 4, characterized in that it contains the amine or amines in a concentration of 0.05 to 10 and preferably 0.1 to 5 wt.%.

6. Release agent according to one of claims 1 to 5, characterized in that it contains the ammonium salt or ammonium salts serving as emulsifier for the amine in a concentration of 0.1 to 5 and preferably 0.1 to 2.5 wt.%.

7. Release agent according to one of claims 1 to 5, characterized in that it contains the oil with release effect in a quantity of 1 to 25 and preferably 10 to 20 wt.% and/or the wax with release effect in a quantity of up to 10 wt.% and preferably 2 to 8 wt.%.

## Revendications

1. Agent de démoulage aqueux, sans solvant organique, qui contient, comme substances de séparation actives, de l'huile et/ou de la cire en émulsion dans de l'eau comme solvant, caractérisé en ce que qu'il contient, comme autre substance de séparation active, une ou plusieurs amines aliphatiques primaires, secondaires et/ou tertiaires avec au moins un reste alcoyle C₁₂-C₂₄, auquel cas dans les amines secondaires ou tertiaires, les autres restes alcoyle peuvent être des restes alcoyle C₁-C₂₄, et, comme émulsifiant pour la ou les amines, un ou plusieurs sels d'ammonium avec la formule [NR₁R₂R₃R₄]⁺X⁻ où R₁, R₂, R₃ et R₄ désignent, indépendamment les des autres, de l'hydrogène ou des restes alcoyle C₁-C₂₄ sous réserve qu'au moins l'un des restes R₁, R₂, R₃, R₄ désigne une reste alcoyle C₁-C₂₄ et X- désigne un anion.

2. Agent de démoulage selon la revendication 1, caractérisé en ce qu'il contient, comme amine de séparation active, de la stéarylamine, de la distéarylamine, de la méthyldistéarylamine, de l'oléylamine, de la tétradécylamine et/ou du stéarylaminethoxylate.

3. Agent de démoulage selon la revendication 1 ou 2, caractérisé en ce qu'il contient, comme émulsifiant pour la ou les amines, un ou plusieurs sels d'ammonium qui dérivent des amines présentes en tant que substance de séparation active.

4. Agent de démoulage selon l'une des revendications 1 à 3, caractérisé en ce qu'il contient, comme émulsifiant pour la ou les amines, du chlorure de distéaryldiméthylammonium, du chlorure de triméthylstéarylammonium, du chlorure de stéarylammonium, du chlorure de méthyldistéarylammonium et/ou de l'acétate d'amine de coco.

5. Agent de démoulage selon l'une des revendications 1 à 4, caractérisé en ce qu'il contient la ou les amines en une concentration de 0,05 à 10 et de préférence de 0,1 à 5% en poids.

6. Agent de démoulage selon l'une des revendications 1 à 5, caractérisé en ce qu'il contient le ou les sels d'ammonium servant d'émulsifiant en une concentration de 0,1 à 5 et de préférence de 0,1 à 2,5% en poids.

7. Agent de démoulage selon l'une des revendications 1 à 5, caractérisé en ce qu'il contient l'huile de séparation active en une quantité de 1 à 25 et de préférence de 10 à 20% en poids et/ou la cire de séparation active en une quantité jusqu'à 10% en poids et de préférence de 2 à 8% en poids.
